# EUROPEAN PATENT APPLICATION

(11) **EP 2 639 715 A2**
(43) Date of publication of application: **18.09.2013**
(21) Application number: 13153037.0
(22) Date of filing: 29.01.2013
(51) Int. Cl.: G06F 17/30

(54) **Live bar**

(30) Priority: 16.02.2012 US 201261599897 P
(71) Applicant: Gface GmbH, 60322 Frankfurt/Main (DE)
(72) Inventor: Yerli, Cevat, 60314 Frankfurt/Main (DE)
(74) Representative: Schmidt, Steffen

(57) **Abstract**

The invention relates to a method and a computer program which, in a computer system having a user input device, a display device and at least one interface for connecting the computer system to a computer network, displays a sidebar on a browser window and comprises the steps of: displaying a browser window on the display device, said browser window is adapted to display live content received from said network and current activities of said user in relation to said live content; detecting a user input in relation to the displayed live content and/or activity, wherein the user input includes dragging the live content and/or current activity from the browser window and dropping it into at least one slot of a sidebar of said browser window; creating a new slot associated with a current activity to be displayed on said sidebar, if the current activity was dropped in a dedicated slot of the sidebar; displaying the new slot on the sidebar; tracking changes inside the activity associated with an existing slot; modifying the existing slot in the sidebar based on changes inside the activity associated with the existing slot; and displaying the modified slot in said sidebar.

## Description

### TECHNICAL FIELD

The present invention relates to a method for displaying a sidebar on a browser window, and, in particular, to a sidebar associated with current activities and live content displayed in browser window. Moreover, the present invention relates to an computer program and, in particular, to computer program adapted to perform the method of displaying a sidebar on a browser window.

### BACKGROUND

On a computer system including input devices and output devices and an interface for connecting the computer system to a computer network, a user typically handles a plurality of applications on a graphical interface such as a browser window. Some of the applications also refer to live content received via the network and to users' activities in connection with the live content received via the network.

However, due to the limited space on the user's graphical interface or browser window, it is not possible to display all activities and online contents simultaneously in the browser window. Thus, the visibility to the user of all activities and online content of the browser windows is limited.

An effort to enhance the visibility of multiple applications running on an user interface was made by providing a sidebar showing items associated with applications which are currently not presented on the graphical user interface.

US 2006/0112348 A1 discloses a multiple-mode window presentation system for managing the presentation of a window's display screen of a computing device. Elements of the graphical user interface are displayed on a task bar or sidebar in the appearance mode when the window is maximized.

US 2006/0123353 A1 discloses a method and a system of task bar button interfaces. The task bar includes a rich presentation task bar button and for displaying and/or dismissing a thumb-nail of an application window associated with the rich presentation task bar button The rich presentation task bar button comprises a display element authored by an application. The display element may comprise dynamic information such as security information, news event information, instant messaging information and application status information.

However, the user's flexibility to organize simultaneous activities in browser windows are still limited as the information displayed in a task bar cannot be dynamically adapted by the user. Moreover, the present systems are not dedicated to organizing activities in connection with a variety of online contents such as in a social network.

Thus, there is a need in the art for a method and a system that helps a user to organize simultaneous activities, in particular simultaneous activities in connection with (but not exclusively for) social networks.

### SUMMARY

A first aspect of the present disclosure provides in a computer system having a user's input device, a display device and at least one interface for connecting the computer system to a computer network, a method of displaying a sidebar on a browser window, said method comprising the steps of:
- displaying a browser window on the display device, said browser window is adapted to display live content received from said network and current activities of said user in relation to said live content;
- detecting a user's input in relation to the displayed live content and/or activity, wherein the user's input includes dragging the live content and/or current activity from the browser window and dropping it in at least one slot of a sidebar of said browser window;
- creating a new slot associated with a current activity to be displayed on said sidebar, if the current activity was dropped in a dedicated slot of the sidebar;
- displaying the new slot on the sidebar;
- tracking changes inside the activity associated with an existing slot;
- modifying the existing slot in the sidebar based on changes inside the activity associated with the existing slot; and
- displaying the modified slot in said sidebar.

The sidebar offers a visual anchor for all live content and current activities of the user e.g., in a social network. Moreover, the system keeps track of changes inside these content and activities and displays them accordingly. Thus, the sidebar helps the user to organize simultaneous activities in relation to live content even if the activities are not currently displayed in the browser window.

The user's activity may include at least one of text chats, video chats, online or offline game sessions, notification applications, media content playback applications.

The live content may include at least one of media content received via the network, notifications received via the network, and icons of users connected to said network.

According to an embodiment, if the user input includes dragging live content from the browser window and dropping it into an existing slot in the sidebar, then the method further comprises adding the online content to the activity associated with said existing slot. Hence, the user may add any live content to an existing activity which is already displayed in a slot of the live bar, even if the activity is not presently shown in the browser's window.

According to an embodiment, if the user input includes dragging of an icon associated with another user connected to said network from said browser window and dropping it to an existing slot in said sidebar associated with a text chat, video chat or an online game session; then the method further includes sending a notification via the network to the other user to be invited to said text chat, video chat or online game session, respectively. Thus, the users may communicate with other users via an activity of the browser window even if the activity is not currently displayed in the browser window.

According to an embodiment, the method may further comprise displaying an expanded slot when said slot is selected by a user's input; and/or displaying a minimized slot when an icon connected to said slot is selected by user input. The expanded slot may display the user's activity or the online content in its usual size for active use. The minimized slot may comprise a shortcut of the online content or the activity associated with the slot.

According to an embodiment, the method may further comprise scrolling in a plurality of slots of said bar when an icon on at least one end of said sidebar is selected by a user input. Moreover, the icon on one or both ends of the sidebar may include a number of hidden slots on the respective end of the bar. Thus, the user may easily scroll in the sidebar even if not all slots are displayed in the sidebar.

According to an embodiment, a number in a slot indicates a number of new messages received in the activity associated with said slot and not yet being displayed on the browser window. Moreover, a number in an icon on at least one end of the bar may indicate number of new messages received in any of the activities and/or live contents associated with all hidden slots at the respective end of the sidebar.

The method may further comprise displaying an enlarged slot when the user moves or hovers a pointing device over said slot. Moreover, when the user hovers or moves the pointing device over the slot, the slot may show further information about the activity associated with the slot. The information may e.g., include the users participating in a chat or game session associated with the slot.

When the user selects a slot displayed in the sidebar, such as an double click by a pointing device, the activity associated with the slot may be shown in an expanded window in the browser window.

According to a preferred embodiment, if the user selects an activity or live content displayed on the browser window, hiding those slots of the displayed slots of the sidebar where the selected activity or content cannot be docked. Moreover, if the user tries to drop content or an activity to a non-allowed slot a warning is displayed in said slot. This functionality helps the user to anchor activities or live content to existing slots of the live bar that the user can directly see after selecting the activity or the live content to which slots this activity or live content may be anchored.

In an embodiment, if a user's action is requested by an activity associated with a slot displayed in the sidebar, the method comprises highlighting said slot in the sidebar. Thus, the user is kept informed on these activities even if not currently displayed on the browser window.

A further aspect of the disclosure provides a computer program including computer-readable instructions that, when executed on a computer system, performs any method as previously disclosed.

### BRIEF DESCRIPTION OF THE DRAWINGS

The specific features, aspects and advantages of the present disclosure will be better understood with regard to the following description and accompanying drawings where:

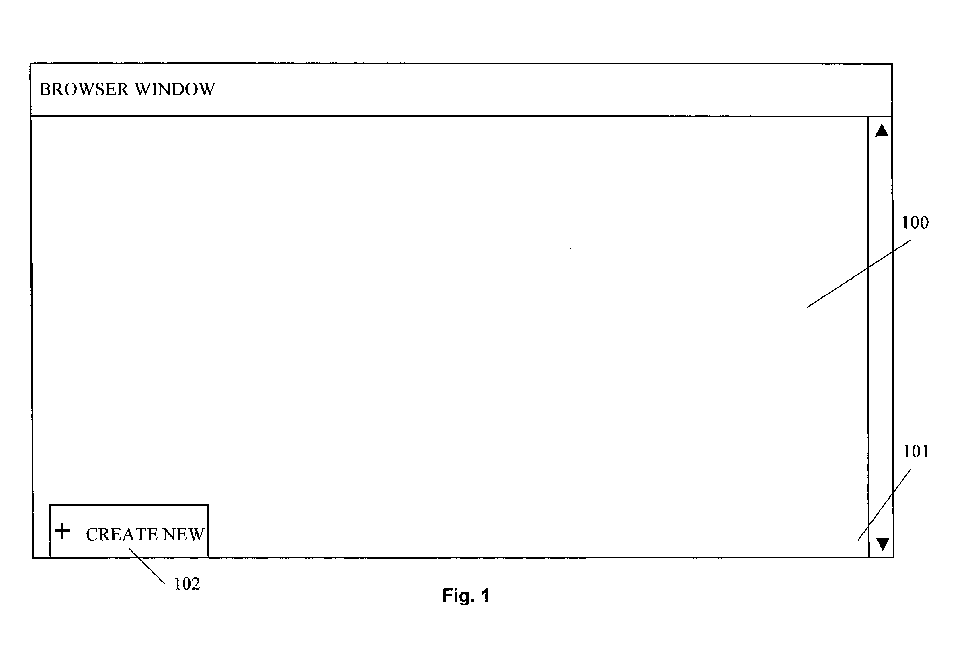

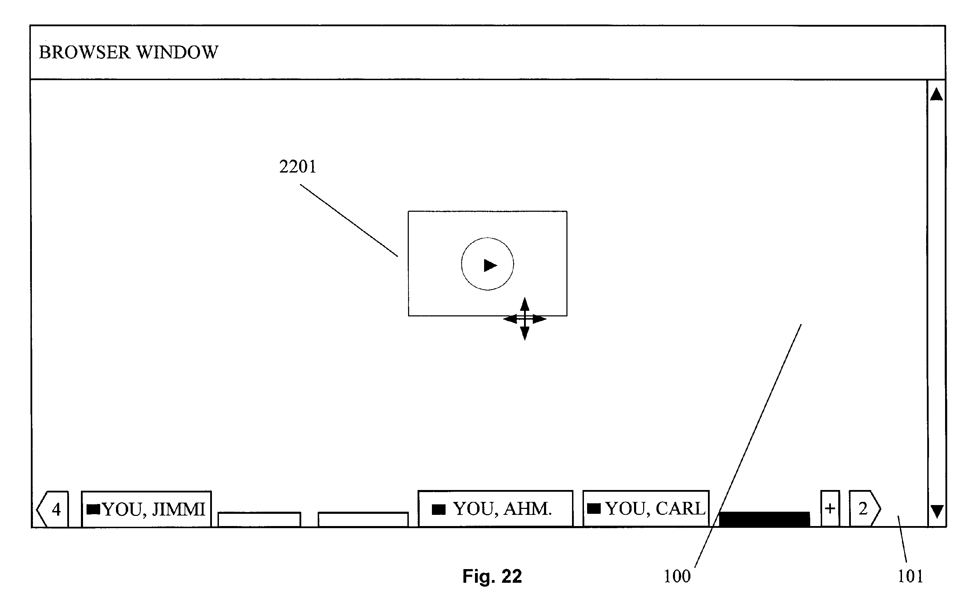

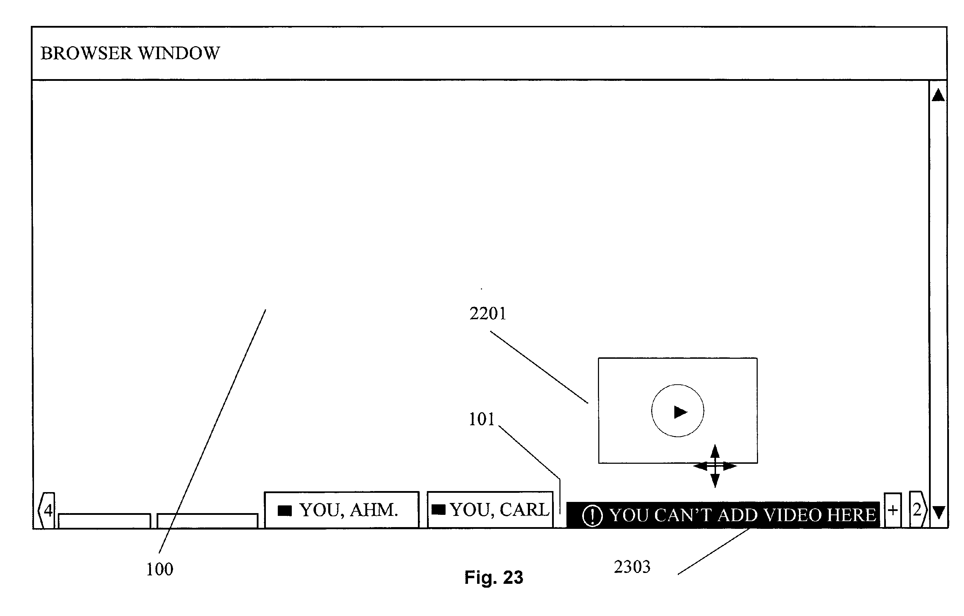

FIGURES 1 to 23 are images of a display screen showing a browser window including a sidebar in different situations.

### DETAILED DESCRIPTION

In the following description of a preferred embodiment reference is made to the drawings which show by way of illustration the specific embodiment. It is to be understood that the embodiments may include changes in design and structure without departing from the scope of the present invention as defined in the claims.

A typical browser window in accordance with the present disclosure is shown in FIGURE 1. The browser window is a user's interface for running a social network. The browser window includes a field 100 (in the example of FIGURE 1 empty) which is adapted for displaying online content received from the network and uses activity, i.e., application programs, in relation to the online content. Such activities may be e.g., video chats, text chats, online gaming etc. The browser window includes a sidebar 101 which, in the present example, is a bar on the bottom of the browser window. In the sidebar of FIGURE 1 only one slot is visible, the "create new" slot 102.

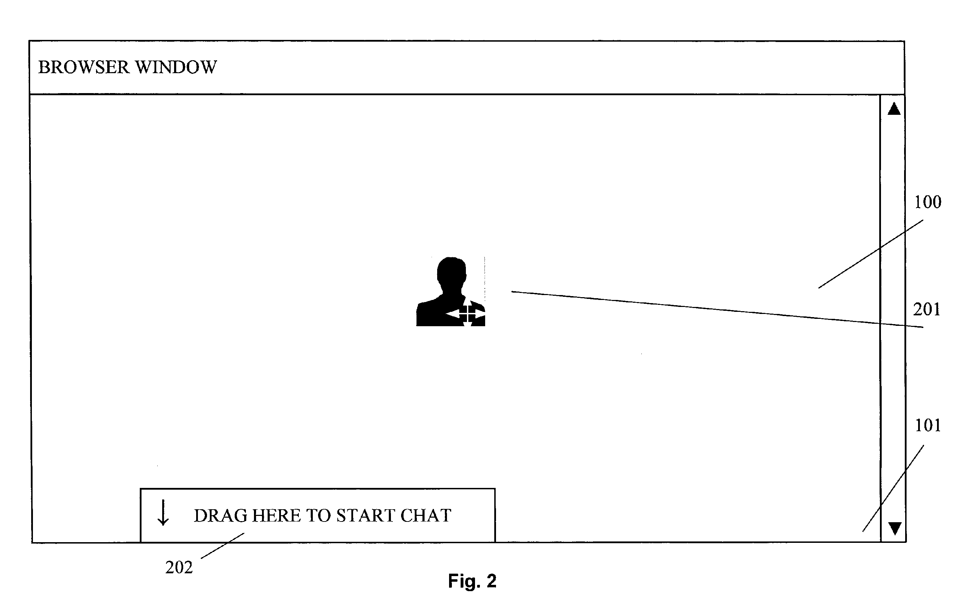

The user may drag an icon 201 of another user, who is online in the social network, to the "create new" slot. Then, the system automatically creates a chat with said user. When the user's icon is selected as shown in FIGURE 2, the "create new" slot changes to a slot 202 showing "drag here to start chat".

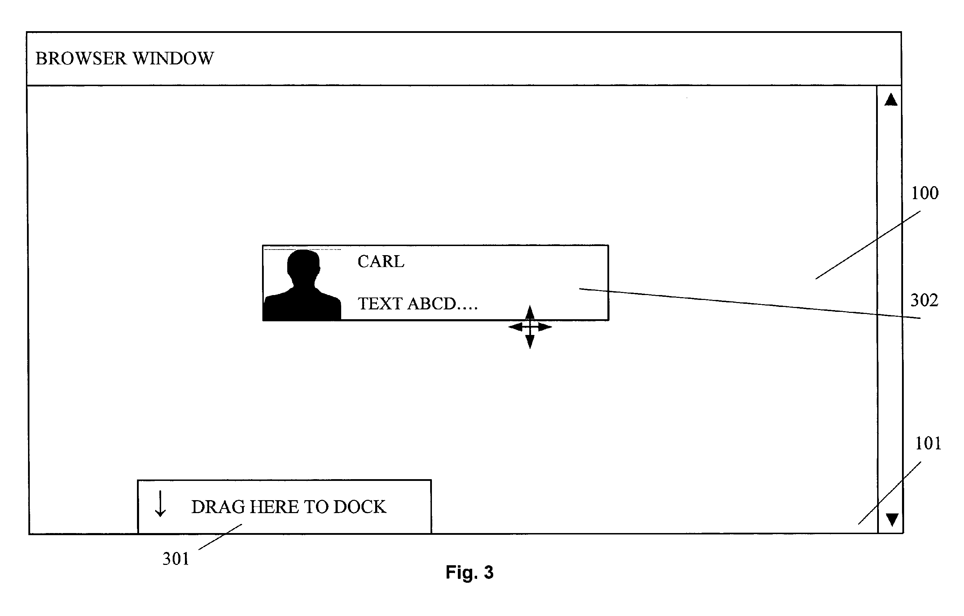

If an existing chat 302 is presented in the field 100 as shown in FIGURE 3, a user may drag the existing chat to the "create new" slot. When the existing chat is selected, the "create new" slot shows "drag here to dock" 302 as shown in FIGURE 3.

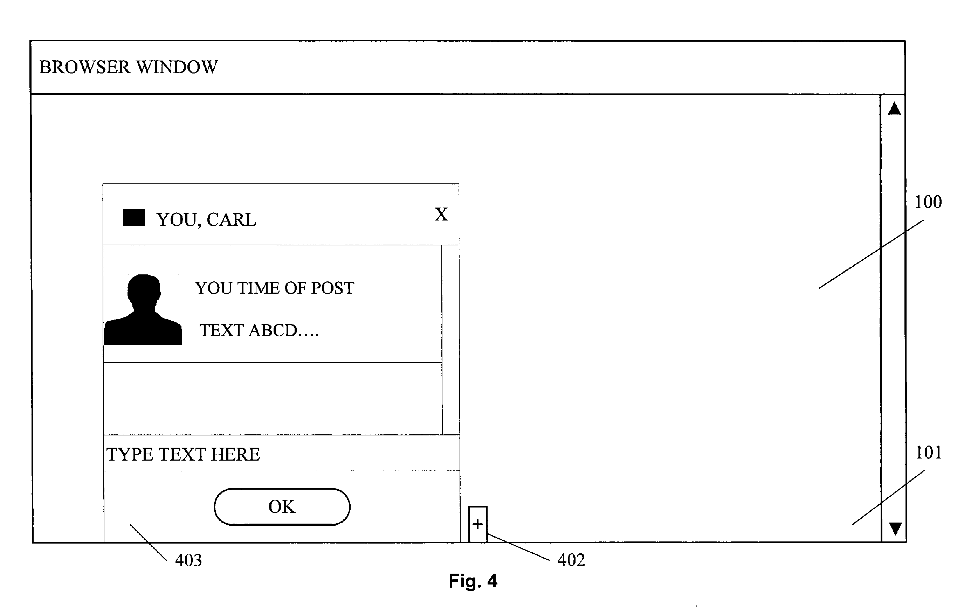

FIGURE 4 shows a docked chat 403 on the live bar 101 in an expanded state. In the expanded state, chat text is presented and the user may input chat messages. Next to the slot a "+" icon 402 appears which is a minimized "create new" slot that appears in the moment the live bar is not used.

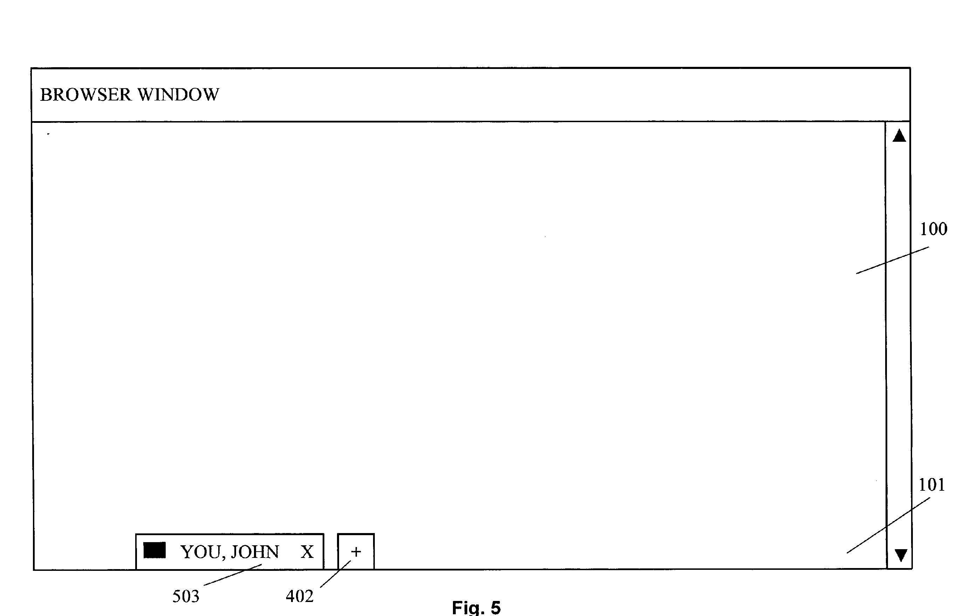

Upon a user interaction on an "x" sign of the chat slot 403 in the expanded state, the slot is minimized to slot 503 as shown in FIGURE 5.

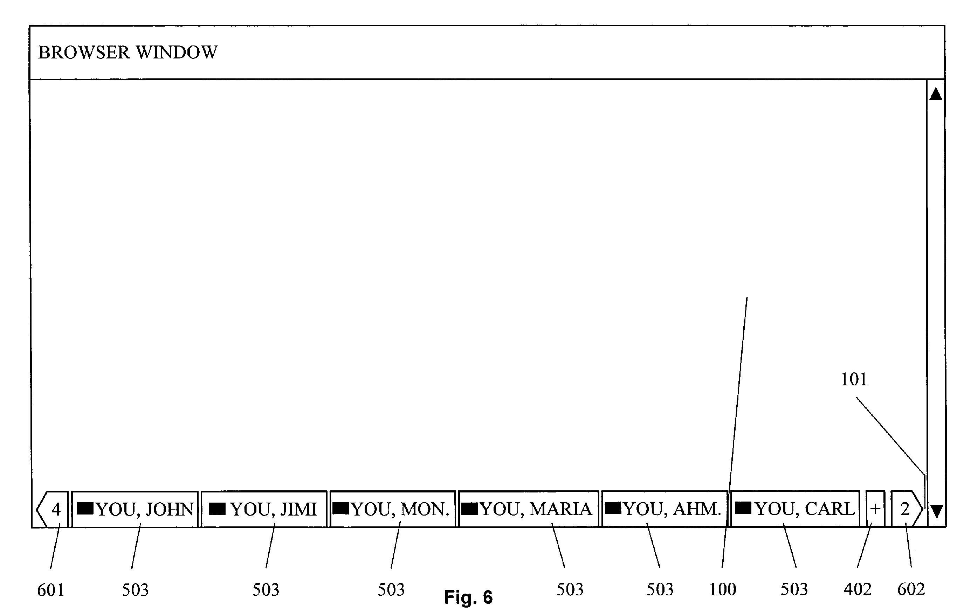

FIGURE 6 shows a plurality of chat slots 503 in the minimized state. Moreover, on the left side and the right side of the sidebar 101, icons 601 and 602 are presented which allows scrolling along slots of the sidebar which are not currently presented. Moreover, each of the icons 601 and 602 shows a count which represents a number of hidden slots on the respective end of the sidebar.

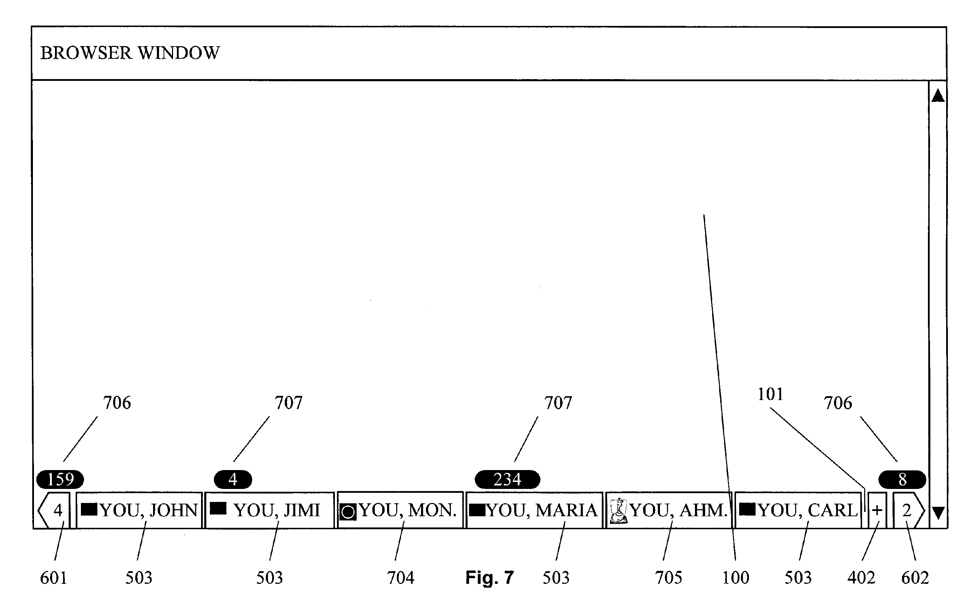

FIGURE 7 shows a plurality of collapsed chat slots 503. Moreover, the sidebar 101 includes a collapsed video chat slot 704 and a collapsed game session slot 705. Several different icons appear in the different types of collapsed slots to indicate the type of slot, i.e., text chat, video chat or game session. On some of the collapsed slots, an indicator 707 indicates how many messages are uploaded that the user has not yet seen. Also on the "move to the left" icon 601 and the "move to the right" slot 602, an indicator 706 indicates how many messages are uploaded on all hidden slots of the respective end that the user has not seen yet. It should be noted that the icons and the slots are merely examples and can change in different embodiments.

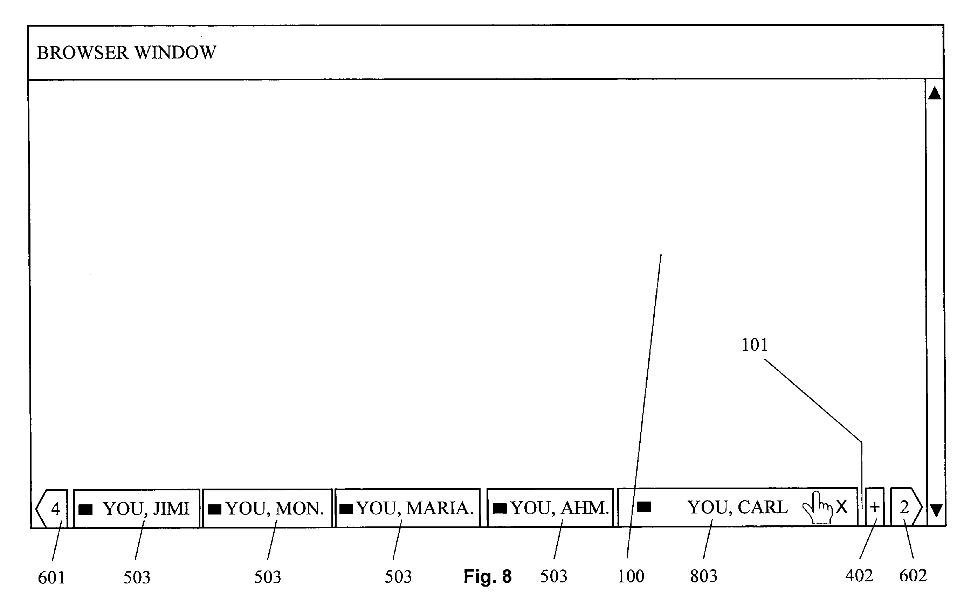

FIGURE 8 shows a pointing device hovering over one of the slots 803. The slot 803 automatically enlarges on the live bar. Moving the pointing device away shrinks the slot 803 again to collapsed slot 503.

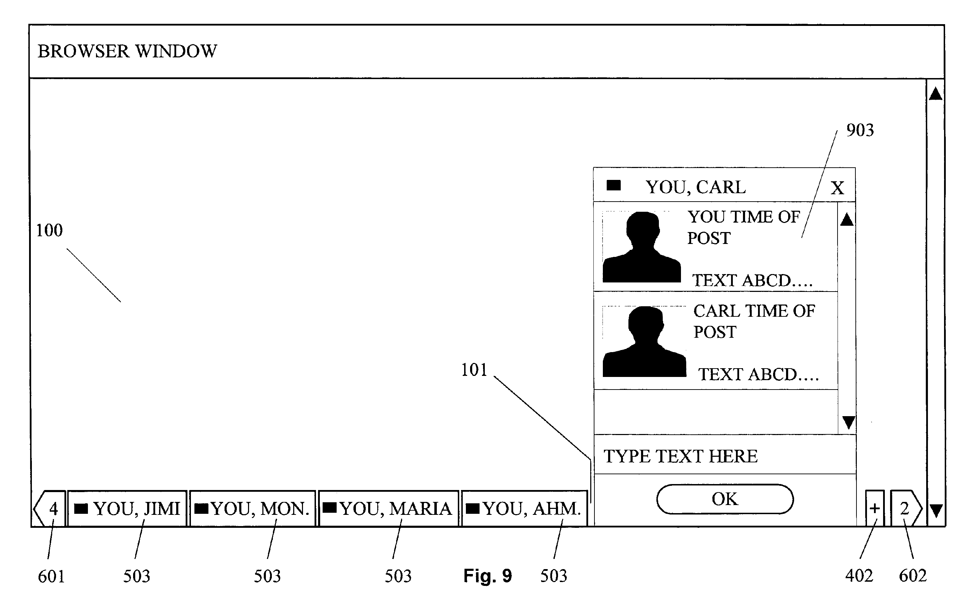

If the user clicks on a slot, the slot expands to its usual size for active use as shown in FIGURE 9 in slot 903. The example shows an expanded chat slot 903. The expanded slot stays attached to the live bar.

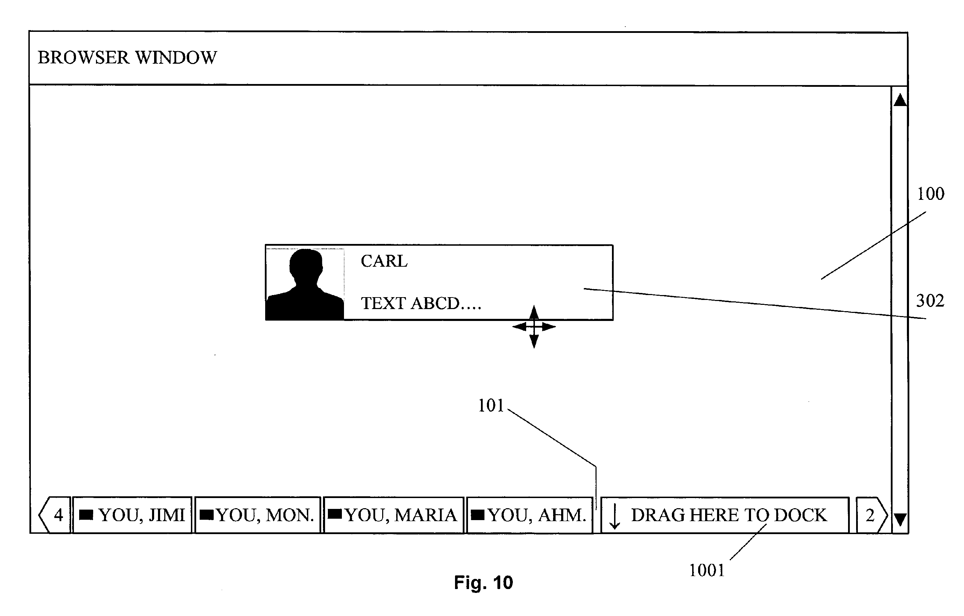

To create a new chat with the user into a filled-up sidebar 101, the user may drag a chat window 302 as shown in FIGURE 10 to the "create new" slot. Upon selection of the chat window 302 with the pointing device, "create new" slot appears as a "drag here to docket" slot 1001 as shown in FIGURE 10. The live bar automatically enlarges the slot 1001 to the right, showing the user where the dragged window 302 can be moved to be attached to the live bar.

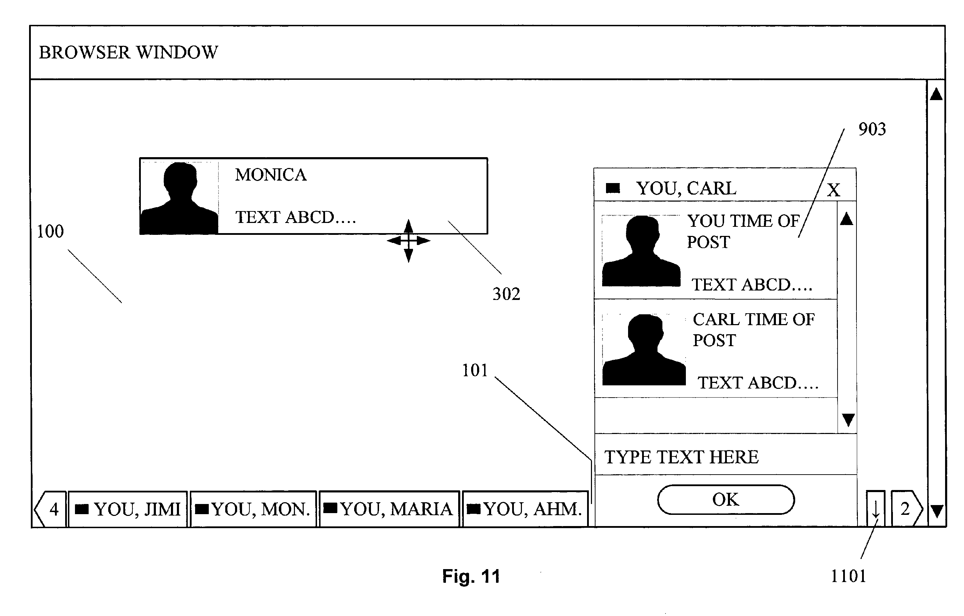

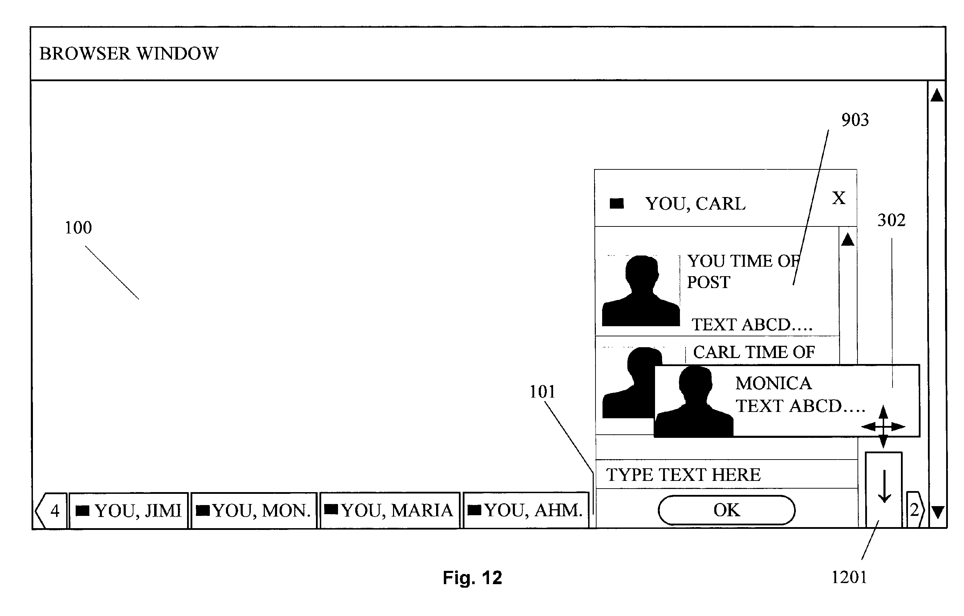

FIGURES 11 and 12 show docking a chat to the live bar while another chat is still open. If the user starts dragging the chat window 302 across the screen, when one chat 903 is still open, he can dock it into a new chat slot by dragging it to the "drag here to docket" slot 1101 of the sidebar. When the chat window 302 is moved across the screen, the "drag here to docket" slot 1101 is increased in size, as slot 1201 in FIGURE 12, indicating to the user that the chat window is allowed to dock on the slot.

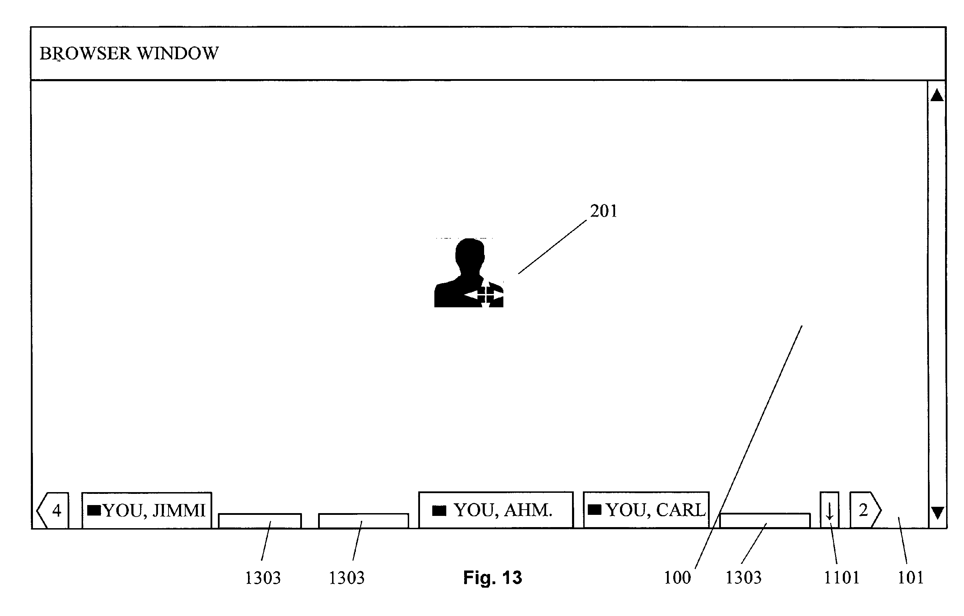

The user can drag another user's icon 201 as shown in FIGURE 13 to the live bar. The live bar will automatically hide those slots 1303 where the dragged user cannot be docketed.

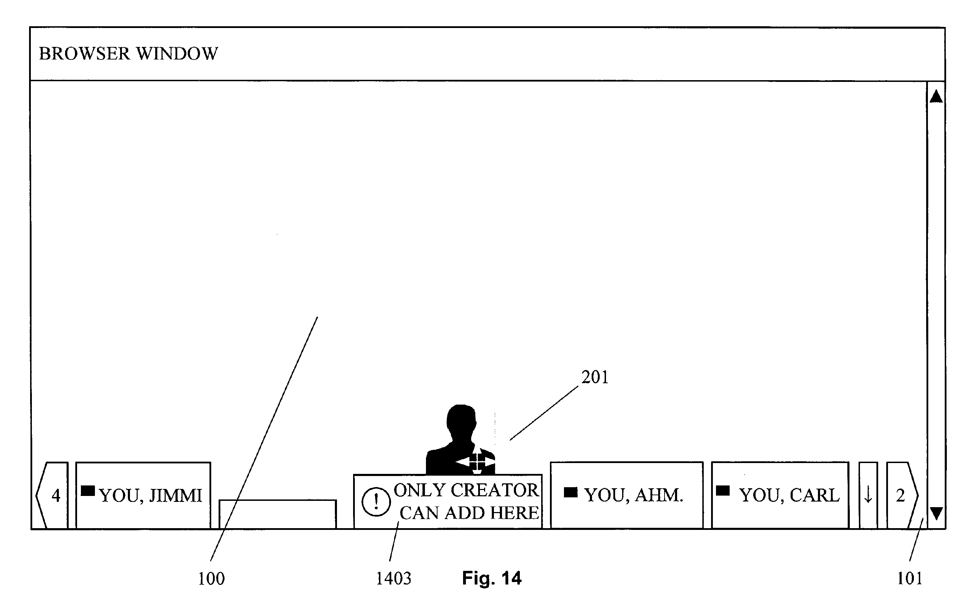

If the user, nevertheless, tries to drop a user icon 201 onto a slot where it cannot be docked on the live bar, the live bar shows a warning 1403, indicating that only the creator of the slot can actively add/drop other users onto said slot, as shown in FIGURE 14.

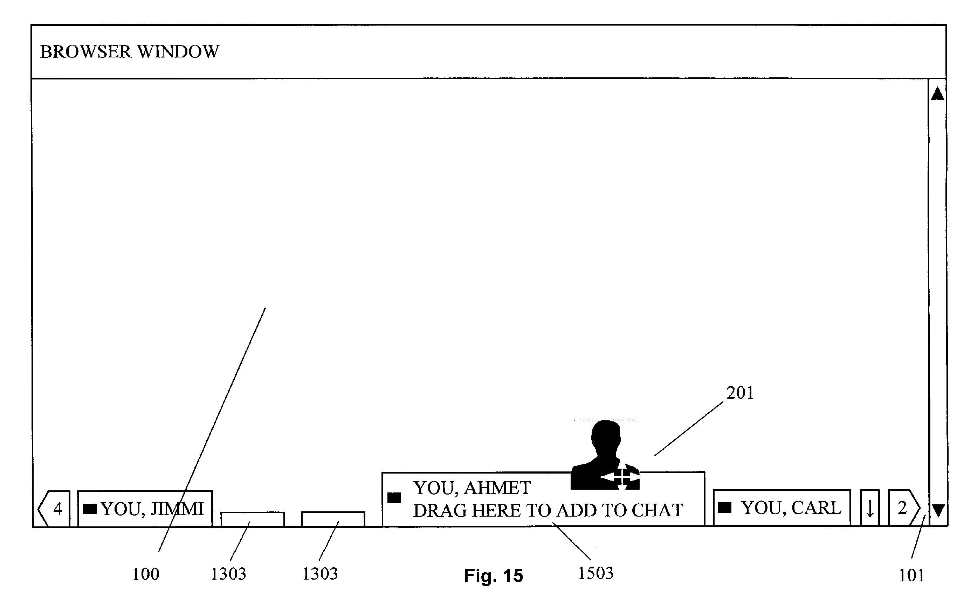

If, to the opposite of FIGURE 14, the user moves a user icon 201 onto a slot where the icon can be dropped, the side bar 101 indicates that the action is permitted by an increased chat slot 1503 as shown in FIGURE 15.

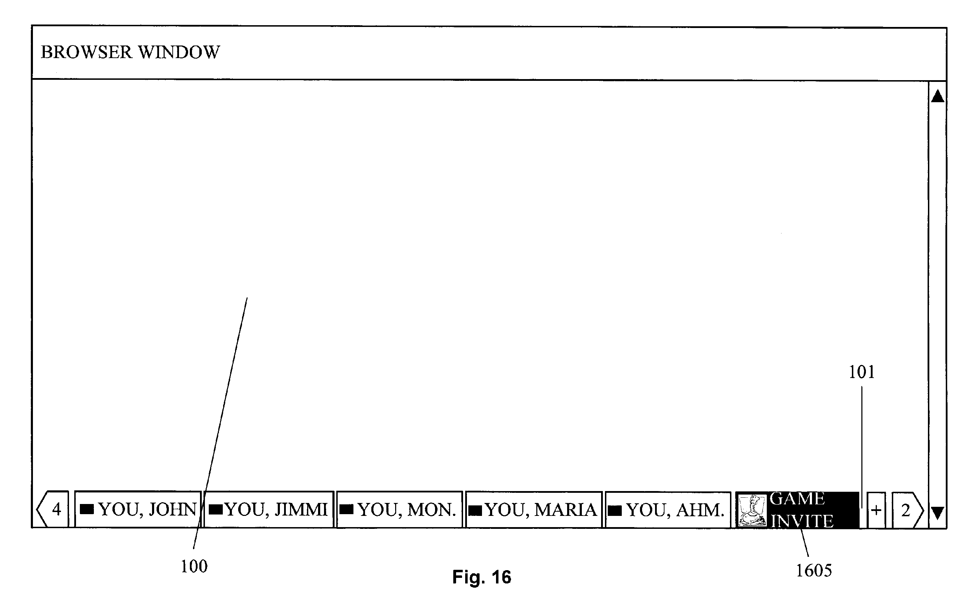

If an online game session needs to alert the user, it does so by changing color as indicated in the game session slot 1605 in FIGURE 16. In FIGURE 16, it is shown that the game session is inviting the user to join the running game by inverting the color of the game's session slot 1605. It is to be understood that also other types of slots such as chat slots may alert a user if any user activity is requested, i.e., if a user is invited to a chat.

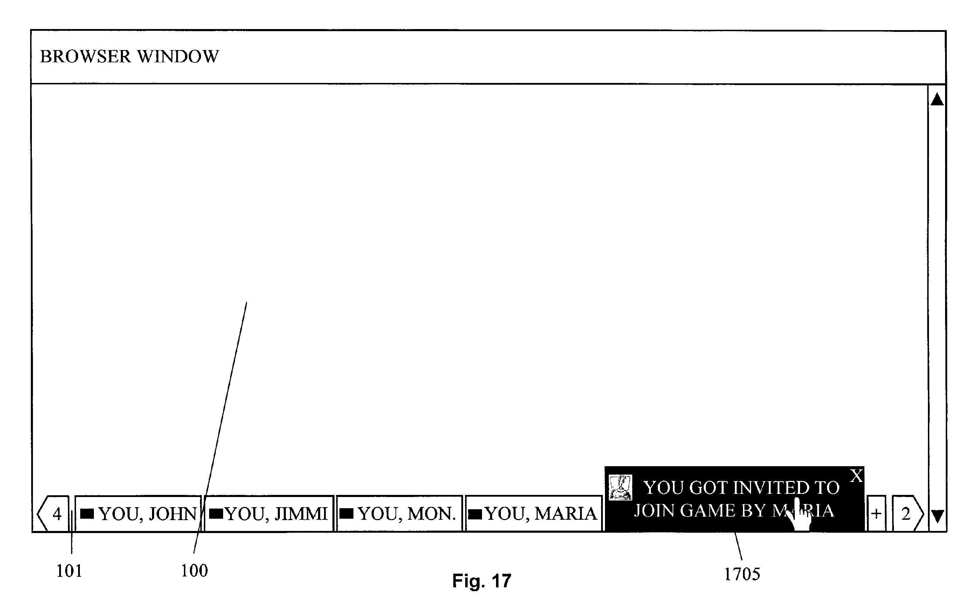

FIGURE 17 shows a pointing device hovering over the game session slot 1705 inviting a user to participate in the session. The game session slot increases its size a bit and shows more details on the content, in this case the user who the invitation comes from. It is to be understood that also other types of slots may show additional information and increasing its size when hovering a pointing device over the slot.

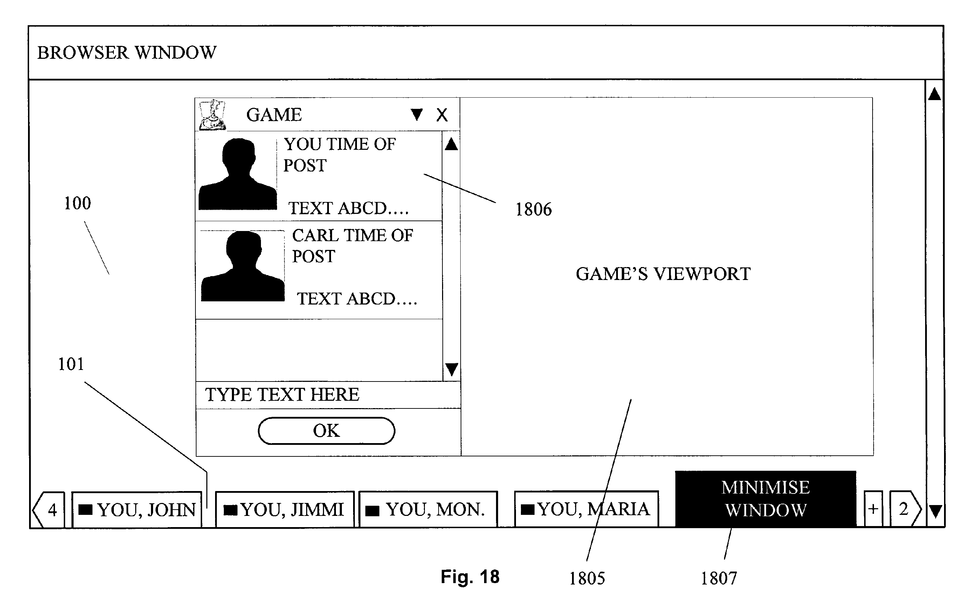

FIGURE 18 shows an expanded game session window 1805 on the display field 100. The game session window includes (by default) an attached chat window 1806 with the other players. By clicking on the slot "minimize window" 1807 in the sidebar 101, the game window can be docketed again to the sidebar.

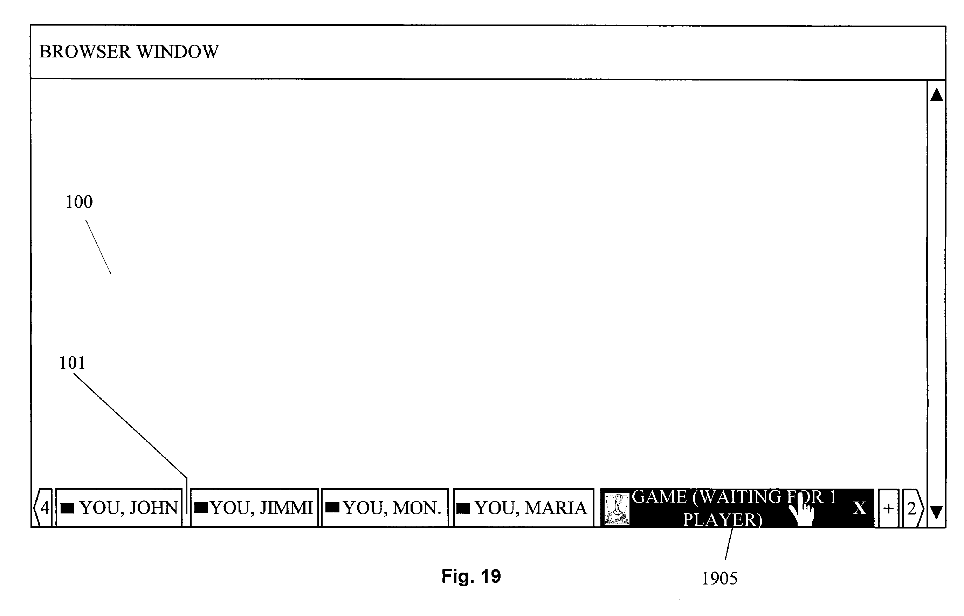

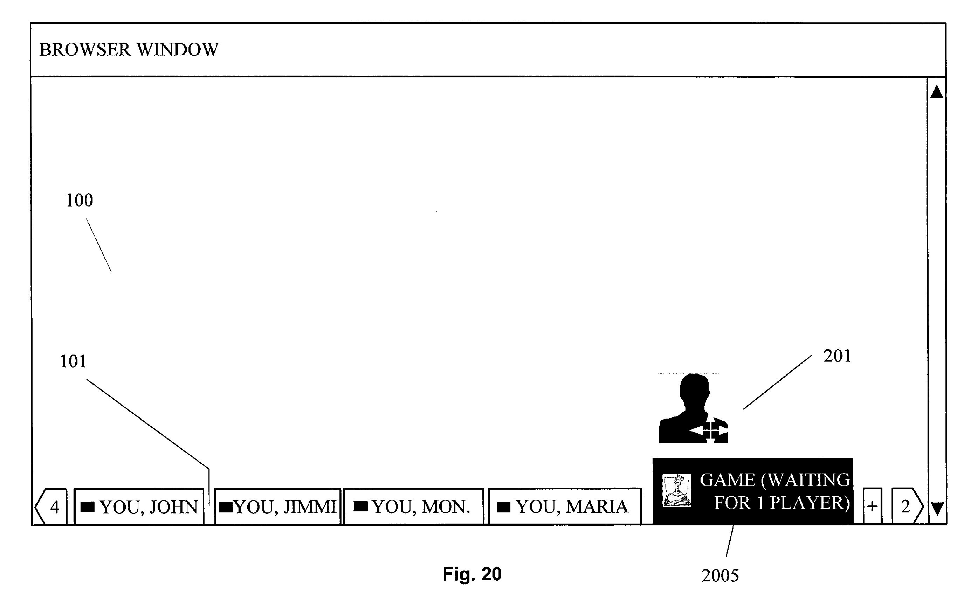

FIGURE 19 shows an enlarged game session slot 1905 when hovering the pointing device over the slot. The slot shows additional information about the game session. In this case, it informs the user that one player is missing to start the game by indicating "waiting for 1 player." The player may be added to the game session by dragging a user icon 201 into the game session slot as indicated in FIGURE 20. The game session slot 2005 is increased in size to indicate that the user icon 201 is allowed to be added to the game session slot.

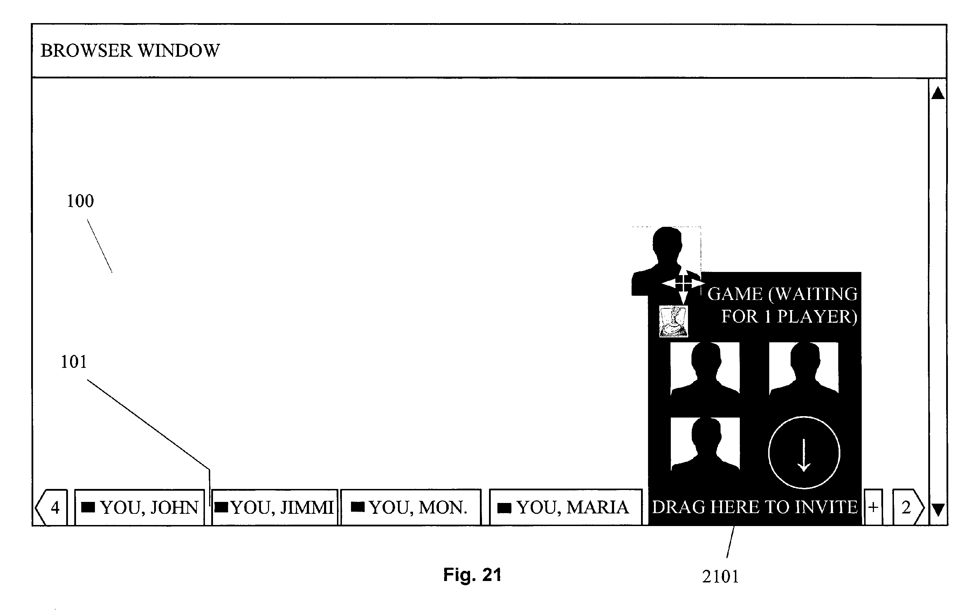

If another user is dragged into the game session, the slot 2101 increases in size as shown in FIGURE 21, and displays the players who are already in the game session, how many open positions it has and, consequently, how many more users are needed to start the game session. In this case, three players are already waiting, while the active user is dragging one more player into the game session to fill it up.

FIGURE 22 shows how to drag media content into the sidebar. Just as with the user icons, the user may drag a media content window 2201 into the live bar. Again, the live bar hides those slots that cannot be used to drag the media content. The media content may of different types such as video, audio, live stream etc.

FIGURE 23 shows media content that a user tries to drag to a slot where it cannot be dropped. The live bar informs the user by showing a warning in the slot 2303. In this example, the user cannot drop the media content window 2201 into a slot 2303 of a text chat.

While the preferred embodiment has been described in many details, it is to be understood that aspects of the invention can take many forms. The embodiments shown herein are intended to illustrate rather than to limit the invention as defined by the claims.

## Claims

1. In a computer system having a user's input device, a display device and at least one interface for connecting the computer system to a computer network, a method of displaying a sidebar on a browser window, said method comprising the steps of:
- displaying a browser window on the display device, said browser window is adapted to display live content received from said network and current activities of said user in relation to said live content;
- detecting a user input in relation to the displayed live content and/or activity, wherein the user input includes dragging the live content and/or current activity from the browser window and dropping it into at least one slot of a sidebar of said browser window;
- creating a new slot associated with a current activity to be displayed on said sidebar, if the current activity was dropped in a dedicated slot of the sidebar;
- displaying the new slot on the sidebar;
- tracking changes inside the activity associated with an existing slot;
- modifying the existing slot in the sidebar based on changes inside the activity associated with the existing slot; and
- displaying the modified slot in said sidebar.

2. The method of claim 1, wherein said user's activity includes at least one of text chats, video chats, online or offline game sessions, notification applications, media content playback applications.

3. The method of claim 1, wherein said live content includes at least one of media content received via the network, notifications received via the network, and icons of users connected to said network.

4. The method of claim 1, wherein if the user input includes dragging live content from the browser window and dropping it into an existing slot in the sidebar, then the method further comprising adding the online content to the activity associated with said existing slot.

5. The method of claim 4, wherein if the user's input includes dragging of an icon associated with another user connected to said network from said browser window dropping it to an existing slot in said sidebar associated with a text chat, video chat or an online game session; then the method further includes
sending a notification via the network to the other user to be invited to said text chat, video chat or online game session, respectively.

6. The method of claim 1 further comprising:
displaying an expanded slot when said slot is selected by a user's input; and/or
displaying a minimized slot when an icon connected to said slot is selected by a user's input.

7. The method of claim 1 further comprising scrolling in a plurality of slots of said bar when an icon on at least one end of said sidebar is selected by a user's input.

8. The method of claim 7 further comprising:
displaying a number in said icon on at least one end of the bar including a number of hidden slots on said end of said bar.

9. The method of claim 1 further comprising:
displaying a number in a slot indicating a number of new messages received in the activity associated with said slot and not yet being displayed on the browser window.

10. The method of claim 8 further comprising:
displaying a number in said icon on said at least one end of the bar indicating a number of new messages received in any of the activities and/or live contents associated with all hidden slots at said end the sidebar.

11. The method of claim 1 further comprising:
displaying an enlarged slot when a user moves a pointing device over said slot.

12. The method of claim 1 further comprising:
displaying information about an activity associated with a slot when hovering a pointing device over said slot,
wherein said information may include users participating in a chat or game session associated with said slot.

13. The method claim of claim 1 further comprising:
displaying an activity associated with a slot in an expanded window when a user selects said slot displayed in the sidebar.

14. The method of claim 1 further comprising:
if the user selects an activity or live content displayed on the browser window, hiding those slots of the displayed slots of the sidebar where the selected activity or content cannot be docked; and/or
if the user tries to drop content or an activity to a non-allowed slot displaying a warning in said slot; and/or
if a user's action is requested by an activity associated with a slot displayed in the sidebar highlighting said slot in the sidebar.

15. A computer program including computer-readable instructions that, when executed on a computer system, performs the method of one of the preceding claims.
